# EUROPÄISCHE PATENTSCHRIFT

(11) **EP 1 083 343 B1**
(45) Veröffentlichungstag und Bekanntmachung des Hinweises auf die Patenterteilung: **03.11.2004**
(21) Anmeldenummer: 00116682.6
(22) Anmeldetag: 02.08.2000
(51) Int. Cl.: B60B 3/16, F16B 43/00

(54) **Scheibenelement für eine Radschraube**
Sheet-like material element for a screw for a wheel
Elément venu d'un matériau en feuille pour une vis de roue

(30) Priorität: 08.09.1999 DE 19942836
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Tschunko, Jan, 70499 Stuttgart (DE); Söffge, Friedhelm, 71229 Leonberg (DE)

(56) Entgegenhaltungen:
- DE-C- 565 582
- FR-A- 610 579
- FR-A- 700 170
- US-A- 3 386 771
- US-A- 4 289 061

## Beschreibung

Die Erfindung bezieht sich auf ein Scheibenelement für eine Radschraube . eine Radmutter eines Kraftfahrzeugrades nach dem Oberbegriff des Anspruchs 1, wie z.B. aus FR-A-610 579 bekannt ist.

Aus der FR-PS 1 452 053 ist ein Scheibenelement für eine Radmutter eines Kraftfahrzeugrades bekannt, das aus einem geschlitzten Ringteil besteht. Dieses weist stirnseitig eine plane Auflagefläche für die Radmutter und einen gegenüberliegenden ausgerundeten Bereich auf, der in eine korrespondierend ausgebildeten ausgerundeten Mulde einer Befestigungsvorrichtung für das Rad angeordnet ist. Ein durchgehender Schlitz im Scheibenelement bewirkt eine gewisse Federwirkung beim Anziehen der Radmutter. Aus der FR 700.170 ist eine Schraubenmutter mit einem federnden Element verbunden, das sich an einer Platte abstützt. Dieses federnde Element weist einen ausgerundeten Endbereich auf, welcher in einem korrespondierenden Bereich der Platte angeordnet ist.

Aufgabe der Erfindung ist es, ein verbessertes Scheibenelement für eine Radschraube bzw. eine Radmutter zu schaffen, die eine optimale gesicherte Verbindung zwischen Rad und Radnabe bewirkt.

Diese Aufgabe wird erfindungsgemäß durch die Merkmale des Anspruchs lgelöst. Weitere vorteilhafte Merkmale beinhalten die Unteransprüche.

Die mit der Erfindung hauptsächlich erzielten Vorteile bestehen darin, daß durch die Ausbildung des Scheibenelements eine federnde und nachgiebige Schraubenverbindung hergestellt wird, die eine sichere Befestigung des Rades an der Radnabe bewirkt. Durch dieses Scheibenelement wird des weiteren ein Lockern und Lösen der Schraube im Betrieb ausgeschlossen. Ferner wird eine Dehnlänge geschaffen und eine Passgenauigkeit erhöht.

Zur Erzielung dieser Vorteile ist das Scheibenelement aus einem Hülsenteil mit einem ausgerundet ausgebildeten Endbereich bestehend, wobei das Hülsenteil im Schnitt eine profilierte Wandung mit einer innenseitigen Hülsenerweiterung oder eineraussenseitigen Hülseneinschnürung aufweist.

Damit eine entsprechende Vorspannung beim Festziehen der Schraube erzielt werden kann, sind verschiedene Ausführungsformen des Scheibenelementes nach der Erfindung möglich. So besteht nach einer ersten Ausführung das Scheibenelement aus einem im Schnitt c-förmigen Profil, wobei eine partielle innenseitige Hülsenerweiterung vorgesehen ist, die mit einem dem ausgerundeten Endbereich gegenüberstehenden verengenden Kragen ausgebildet ist.

Des weiteren kann die innenseitige Hülsenerweiterung zylinderförmig ausgeführt sein, wobei die Endbereiche nach einwärts bis zum Schraubenschaft ausgerichtete Kragen bilden, und der eine Kragen den ausgerundeten Endbereich bildet.

Es ist nach einer weiteren Ausführung auch möglich, daß die innenseitige Hülsenerweitung kegelförmig ausgeführt ist und der kleinere Durchmesser des Kegels im ausgerundeten Endbereich liegt, wobei der andere Enbereich ein zum Schraubenschaft einwärts gerichteten Kragen bildet und die Schraube abstützt.

Des weiteren kann nach der Erfindung vorgesehen sein, daß die Hülseneinschnürung das Scheibenelementes aus wenigstens einer außenseitigen Ringnut besteht und diese sich zwischen einem nach auswärts gerichteten Kragen und dem ausgerundeten Endbereich befindet.

Ferner kann das Scheibenelement auch aus einem zylinderförmigen Hülsenteil bestehen, an dem sich der ausgerundete Endbereich mit einem einwärts gerichteten Kragen anschließt. Das zylindrische Hülsenteil ist nach einer ersten Ausführung innenseitig mit einer Erweiterung versehen, wobei bei einer weiteren Ausführung das zylindrische Hülsenteil innen- und außenseitig in der Wandung verjüngt ist und sich eine innenseitige Erweiterung sowie eine außenseitige Einschnürung ergibt.

Alle Ausführungsformen der Scheibenelemente weisen einen ausgerundeten Endbereich auf, der in einer korrespondierend ausgerundeten Mulde des Rades liegt und somit auch eine genaue Zentrierung des Rades erzielt wird.

Die Scheibenelemente bestehen vorzugsweise aus einem Stahlwerkstoff und liegen mit ihrem ausgerundeten Endbereich, bei einem Aluminiumrad etwa, mit dem gesamten ausgerundeten Flächenbereich des Scheibenelementes in einer entsprechenden Mulde des Rades an. Bei einem Stahlrad liegt dagegen nur ein kleinerer Flächenbereich des ausgerundeten Endbereiches des Scheibenelementes in der Mulde des Rades an.

Die erzielte Federvorspannung bei eingesetzten Schraubenbolzen wird wesentlich durch die Form des Scheibenelementes erzielt, wobei die Ausführung mit einem c-förmigen Profil eine größere Federvorspannung bewirkt als die zylindrischen Ausführungen des Scheibenelementes.

Ausführungsbeispiele der Erfindung sind in den Zeichnungen dargestellt und werden im folgenden näher beschrieben.

Es zeigen
- Fig. 1: eine Ansicht auf ein c-profilförmiges Scheibenelement mit innenliegender Erweiterung im Schnitt mit Radbolzen in einem Stahlrad und in einem Alurad eingesetzt,
- Fig. 2: eine weitere Ausführung eines Scheibenelementes mit äußerer Einschnürung und eingesetztem Radbolzen,
- Fig. 3: ein c-profilförmiges Scheibenelement im Schnitt mit einer inneren zylindrischen Erweiterung im Hülsenteil,
- Fig. 4: eine Ausführung eines c-profilförmigen Scheibenelementes im Schnitt ähnlich der Ausführung gem. Fig. 1 als Einzelteil dargestellt,

- Fig. 5: eine weitere Ausführung eines c-profilförmigen Scheibenelementes im Schnitt mit einer äußeren Einschnürung.

Ein Scheibenelement 1; 2; 3; 4; 5; 6 für eine Radschraube umfasst im wesentlichen ein Hülsenteil 1a, 2a; 3a; 4a; 5a; 6a mit einem ausgerundeten Endbereich 8, wobei das Hülsenteil im Schnitt eine profilierte Wandung mit einer Hülsenerweiterung 9; 10; 11; 12; 13 und/oder mit einer Hülseneinschnürung 14; 15 aufweist.

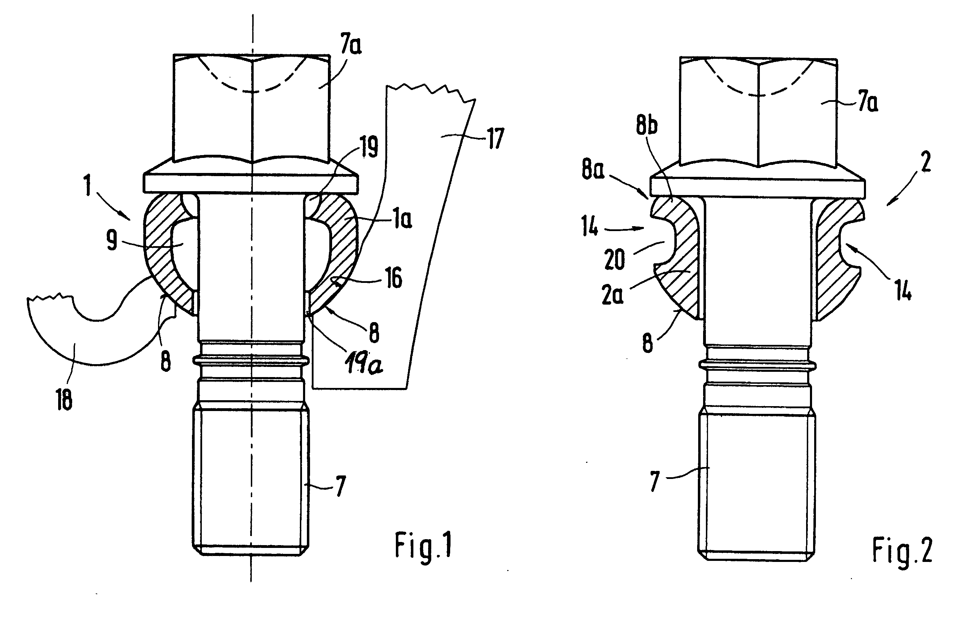

Wie in den Fig. 1 und 2 beispielhaft dargestellt, ist das Scheibenelement mit seinem ausgerundeten Endbereich 8 in einer entsprechend ausgebildeten Mulde 16 des Rades 17 oder 18 eingesetzt. Über die Radschraube 7 wird das Rad 17; 18 an einer Radnabe, dienicht dargestellt ist, befestigt.

Die Radschraube 7 durchdringt das Scheibenelement, wobei sich der Schraubenkopf 7a am gegenüberliegenden Ende des ausgerundeten Endbereiches 8 an einem Kragen 8b abstützt. Die Durchmesser D und D1 der Bohrungen 19 und 20 in den Scheibenelementen sind mit einem gewissen Spiel etwas größer als der Schraubendurchmesser ausgeführt.

Die Scheibenelemente 1 und 4 weisen in etwa eine gleiche Form auf und bestehen aus einem Hülsenteil 1a; 4a mit einem im Schnitt c-förmigen Profil, das eine partielle innenseitige Hülsenerweiterung 9; 11 aufweist. Das weitere Scheibenelement 3 ist ebenfalls mit einem im Schnitt c-förmigen Profil ausgeführt und weist eine Hülsenerweiterung 10 auf.

Bei dem Scheibenelement 1 und 4 (Fig. 1 und 4) ist die innenseitige Hülsenerweiterung 9; 11 kegelförmig ausgeführt, wobei der kleinere Durchmesser des Kegels im ausgerundeten Endbereich 8 des Elementes liegt und der andere gegenüberstehende Endbereich 8a ein zum Schraubenschaft einwärts gerichteten Kragen 8b bildet.

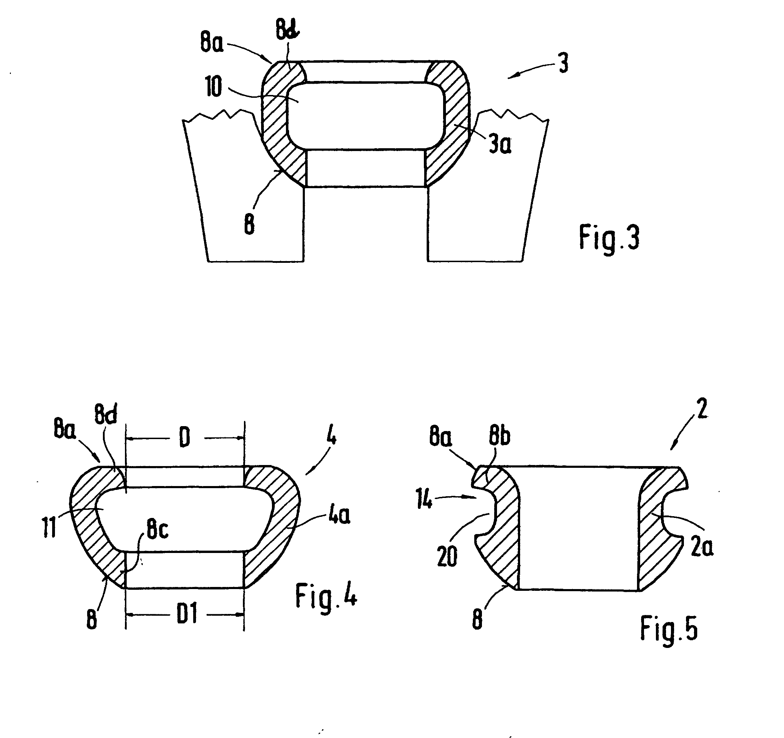

Bei dem Scheibenelement 3 (Fig. 3) ist die innenseitige Hülsenerweiterung 10 zylinderförmig ausgeführt. Die Endbereich 8 und 8a dieses Elements 3 bilden nach einem zum Schraubenschaft hin ausgerichteten Kragen 8b, 8c, wobei der Kragen 8b den Schraubenkopf 7a abstützt und der Kragen 8c den ausgerundeten Endbereich 8 bildet.

Nach einer weiteren Ausführung gem. Fig. 5 ist das Scheibenelement 2 mit wenigstens einer außenseitigen, rechteckförmigen oder quadratischen Ringnut 20 als außenliegende Hülseneinschnürung 14 versehen, die sich zwischen einem nach auswärts gerichteten Kragen 8b und dem ausgerundeten Endbereich 8 befindet. Die Ringnut 20 kann nach der Erfindung auch eine andere geometrische Querschnittsform aufweisen als wie dargestellt, beispielsweise dreieckförmig oder als Kreisabschnitt.

## Patentansprüche

1. Scheibenelement für eine Radschraube (7) eines Kraftfahrzeugrades, das mit seinem einen Ende teilweise in einer ausgerundeten Mulde (16) an der Befestigungsbohrung für das Rad angeordnet ist und mit seinem anderen Ende an der Radschraube (7) abgestützt ist, und das Scheibenelement (1; 2; 3; 4) aus einem Hülsenteil (1a; bis 4a) mit einem der Mulde (16) zugerichteten ausgerundet ausgebildeten Endbereich (8) und einer im Schnitt profilierten Wandung besteht, **dadurch gekennzeichnet, daß** das Hülsenteil (1a; 2a; 3a; 4a) des Scheibenelements (1, 2, 3) aus einem im Querschnitt etwa C-förmigen Profil besteht, welche eine innenseitige Hülsenerweiterung (9; 10; 11) oder einer außenseitigen Hülseneinschiebung (14) aufweist, die einen dem ausgerundeten Endbereich (8) gegenüberstehenden nach innen gerichteten verengenden Kragen (8c; 8d) oder nach auswärts gerichteten Kragen (8b) besitzt.

2. Scheibenelement nach Anspruch 1, **dadurch gekennzeichnet, daß** die innenseitige Hülsenerweiterung (9; 10) etwa zylinderförmig ausgeführt ist und die Endbereiche (8; 8a) den nach einwärts bis zum Schraubenschaft ausgerichteten Kragen (8c und 8d) bilden, wob ei der eine Kragen (8c) im ausgerundeten Endbereich (8) liegt.

3. Scheibenelement nach den Anspruch 1, **dadurch gekennzeichnet, daß** die innenseitige Hülsenerweiterung (9; 10) etwa kegelförmig ausgeführt ist und der kleinere Durchmesser des Kegels im ausgerundeten Endbereich (8) liegt und der andere, gegenüberstehende Endbereiche (8a) den zum Schraubenschaft einwärts gerichteten Kragen (8d) bildet.

4. Scheibenelement nach den Anspruch 1, **dadurch gekennzeichnet, daß** die Hülseneinschnürung 14 des Scheibenelements (2) aus wenigstens einer außenseitigen Ringnut (20) besteht und diese sich zwischen dem nach auswärts gerichteten Kragen (8b) und dem ausgerundeten Endbereich (8) befindet.

## Claims

1. A disc element for a wheel bolt (7) of a motor-vehicle wheel, which is arranged with one of its ends partially in a rounded hollow (16) on the fastening bore for the wheel and is supported with its other end on the wheel bolt (7), and the disc element (1; 2; 3; 4) comprises a sleeve part (1a; to 4a) with a rounded end region (8) facing the hollow (16) and a wall of profiled section, **characterized in that** the sleeve part (1a; 2a; 3a; 4a) of the disc element (1, 2, 3) comprises a profiled portion which is substantially C-shaped in cross-section and which has a widened portion (9; 10; 11) of the sleeve on the inside or a recessed portion (14) of the sleeve on the outside, which has a tapering collar (8c; 8d) directed outwards or collar (8b) directed outwards which is opposite the rounded end region (8).

2. A disc element according to Claim 1, **characterized in that** the widened portion (9; 10) of the sleeve on the inside is substantially cylindrical, and the end regions (8; 8a) form the collar (8c and 8d) orientated inwards as far as the shank of the bolt, wherein one collar (8c) is situated in the rounded end region (8).

3. A disc element according to Claim 1, **characterized in that** the widened portion (9; 10) of the sleeve on the inside is substantially tapered and the smaller diameter of the taper is situated in the rounded end region (8) and the other, opposite end region (8a) forms the collar (8d) directed inwards towards the shank of the bolt.

4. A disc element according to Claim 1, **characterized in that** the constriction 14 of the sleeve of the disc element (2) comprises at least one annular groove (20) on the outside and the said annular groove (20) is situated between the collar (8b) directed outwards and the rounded end region (8).

## Revendications

1. Élément de rondelle pour une vis de roue (7) d'une roue d'un véhicule automobile, qui par l'une de ses extrémités, est disposé en partie dans un enfoncement (16) arrondi prévu sur le trou de fixation de la roue, et prend appui par son autre extrémité contre la vis de roue (7), et l'élément de rondelle (1 ; 2 ; 3 ; 4) est constitué d'une partie de douille (1a ; à 4a) avec une zone terminale (8) réalisée arrondie, dirigée vers le creux (16), et d'une paroi profilée en coupe, **caractérisé en ce que** la partie de douille (1a ; 2a ; 3a ; 4a) de l'élément de rondelle (1 ; 2, 3) est constitué d'un profilé de section transversale approximativement en C qui présente un élargissement de douille (9 ; 10 ; 11) côté intérieur ou un rétrécissement de douille (14) côté extérieur, qui possède une collerette (8c ; 8d) de rétrécissement de douille, dirigée vers l'intérieur et faisant face à la zone terminale (8) arrondie, ou des collerettes (8b) dirigées vers l'extérieur.

2. Élément de rondelle selon la revendication 1, **caractérisé en ce que** l'élargissement de douille (9 ; 10) côté intérieur présente une forme approximativement cylindrique et les zones terminales (8 ; 8a) forment la collerette (8c et 8d) orientée vers l'intérieur jusqu'à la tige de vis, une collerette (8c) se situant dans la zone terminale (8) arrondie.

3. Élément de rondelle selon la revendication 1, **caractérisé en ce que** l'élargissement de douille (9 ; 10) côté intérieur est réalisé approximativement en forme de cône et le petit diamètre du cône se situe dans la zone terminale (8) arrondie, et l'autre zone terminale (8a) opposée forme la collerette (8d) dirigée vers l'intérieur, vers la tige de vis.

4. Élément de rondelle selon la revendication 1, **caractérisé en ce que** le rétrécissement de douille (14) de l'élément de rondelle (2) est constitué d'au moins une rainure annulaire (20) côté extérieur qui se trouve entre la collerette (8b) dirigée vers l'extérieur et la zone terminale (8) arrondie.
